# FASCICULE DE BREVET EUROPEEN

(11) **EP 2 900 053 B1**
(45) Date de publication et mention de la délivrance du brevet: **15.11.2017**
(21) Numéro de dépôt: 13765376.2
(22) Date de dépôt: 06.09.2013
(51) Int. Cl.: A01G 25/02

(54) **DISTRIBUTEUR D'IRRIGATION À DÉBIT AUTORÉGULÉ ET SON UTILISATION**
BEWÄSSERUNGSVORRICHTUNG MIT SELBSTREGULIERENDEM DURCHFLUSS UND VERWENDUNG
IRRIGATION DISTRIBUTOR WITH SELF REGULATION OF DISPENSING RATE AND ITS USE

(30) Priorité: 25.09.2012 FR 1258962
(43) Date de publication de la demande: 05.08.2015
(73) Titulaire: Institut National de Recherche en Sciences et Technologies pour l'Environnement et l'Agriculture (IRSTEA), 92160 Antony (FR)
(72) Inventeur: MOLLE, Bruno, 13114 Puyloubier (FR); DEBORDE, Julien, 13590 Meyreuil (FR); BENAYOUN, Bernard, 13140 Miramas (FR); TOMAS, Séverine, 13182 Aix En Provence Cedex 5 (FR)
(74) Mandataire: Petit, Maxime
(86) Numéro de dépôt international: PCT/FR2013/052056
(87) Numéro de publication internationale: WO 2014/049220

(56) Documents cités:
- WO-A1-83/00004
- WO-A1-84/02828
- GB-A- 2 018 113
- US-A- 5 413 282

## Description

La présente invention concerne un distributeur d'irrigation à débit autorégulé par compensation de pression, ainsi que son utilisation.

Les distributeurs d'irrigation sont en particulier utilisés pour une irrigation dite localisée. La méthode d'irrigation appliquée par ces distributeurs est caractérisée par des apports d'eau relativement faibles, fréquents et localisés à proximité immédiate des cultures. Elle consiste à réapprovisionner en eau, périodiquement, une partie du réservoir du sol en distribuant l'eau en continu au même endroit sous forme de gouttes ou de jet continu de faible section. L'eau s'infiltre dans le sol à partir de ce point en humectant la zone racinaire, verticalement par gravité et latéralement par effet de capillarité. Le besoin hydrique des plantes et la perméabilité du sol déterminent la fréquence des apports dont le volume varie au cours de la saison.

Il s'agit d'installations en général fixes dans lesquelles l'eau est transportée le long de lignes de cultures par une canalisation principale ou rampe le long de laquelle les distributeurs d'irrigation sont raccordés en étant régulièrement espacés les uns des autres pour assurer un apport d'eau uniforme.

Ces distributeurs d'irrigation ont un faible débit compris entre 0,5 et 100,0 l/h en allant du goutte-à-goutte à la micro-aspersion sous une pression de 0,5 à 4,0 bars. A l'intérieur du distributeur, l'eau suit un cheminement complexe et plus ou moins long qui induit une perte de charge. Pour déterminer la pression de fonctionnement des réseaux et la longueur maximum des canalisations ou des rampes, on cherche en général à rester dans un intervalle de débit de ±15% du débit moyen.

Cette caractéristique est essentielle pour déterminer l'uniformité de la distribution.

Le document WO 84/02828 décrit un distributeur d'irrigation à débit régulé, comportant une chambre avec une entrée de fluide et une sortie de fluide, et un disque élastique maintenu dans la chambre, et libre de se déformer sous la pression du fluide circulant dans la chambre, le centre du disque coopérant avec une rainure de régulation près de la sortie de fluide, le bord du disque coopérant avec une rainure primaire s'étendant autour et au-dessus du bord du disque.

Le document US 5 413 282 décrit un distributeur d'irrigation à membrane élastique et rainure de passage de fluide. En cas de variation de la pression amont d'alimentation en fluide, la membrane élastique se déforme pour réguler la pression aval de distribution de fluide.

Le document WO/1983/000004 décrit un distributeur d'irrigation de ce genre. Il comporte un corps creux qui est divisé par une membrane élastique en un évidement aval reliée à une entrée et un évidement amont relié à une sortie. La membrane est solidaire d'une bague montée fixe dans le corps creux. La membrane est pourvue d'un trou d'écoulement périphérique alors qu'un orifice de sortie central est prévu dans l'évidement amont et entourée par un anneau formant surface d'appui à la membrane lorsqu'elle est déformée. De cette manière, la membrane peut entièrement fermer l'orifice de sortie central, alors qu'une rainure radiale est prévue sur la surface d'appui annulaire de manière à former avec la membrane un canal de régulation à section variable.

Un des inconvénients de ce distributeur est qu'il est limité à des flux très faibles inférieurs à 8l/h et qu'il n'est pas capable de distribuer directement, sans filtration en amont, des eaux fortement chargées en particules. D'une manière générale, il nécessite en effet une filtration en amont de 100µm à 125 µm. Il présente en outre dans son intérieur, en particulier dans son évidement aval, des formes qui créent des zones de vitesse d'écoulement nulle, pièges à ces particules, ce qui a pour conséquence que dans ces conditions, il devient vite colmaté. Par ailleurs, le mouvement de la membrane de ce distributeur n'est pas limité, ce qui entraîne un vieillissement relativement rapide de la membrane.

Le colmatage des distributeurs d'irrigation est en effet un problème courant et sérieux qui affecte de façon sensible les coûts de main-d'oeuvre pour la maintenance, mais aussi la pérennité des installations. En outre, il est difficile de déceler les distributeurs d'irrigation bouchés sur les installations en cours de fonctionnement, et onéreux, voire impossible de les nettoyer ou de les remplacer.

Ce problème devient encore plus perceptible dans l'utilisation des eaux contenant des charges importantes en substances biologiques, chimiques et/ou minérales. Cela a pour conséquence qu'il devient pratiquement impossible d'utiliser, entre autres, les effluents en cours d'épuration pour l'irrigation des cultures.

Ainsi, pour distribuer les eaux fortement chargées, les distributeurs d'irrigation actuellement utilisés demandent généralement des filtrations amont très fines, de l'ordre de 80 à 130 µm. En principe, la section minimum de passage dans les distributeurs est déterminant pour ce besoin de filtration. Or, les dispositifs de filtration entraînent des coûts initiaux d'installation, un besoin de maintenance important et ne garantissent pas l'absence d'un colmatage progressif en aval d'un filtre par sédimentation de particules.

Le but de l'invention est de proposer un distributeur d'irrigation peu encombrant, à circuit court, capable d'uniformiser la charge hydraulique résiduelle en sortie du distributeur, sans créer de zone pièges à particules correspondant à un fluide mort, et permettant d'utiliser les effluents plus ou moins traités, sans besoin de filtration en amont. Le distributeur selon l'invention permet de réguler le débit quelle que soit la pression d'entrée afin d'homogénéiser la distribution de l'eau, y compris les eaux usées plus ou moins traitées ou fortement chargées.

L'objet de l'invention est un distributeur d'irrigation à débit autorégulé, comportant un corps creux définissant dans son intérieur un évidement amont communiquant avec une ouverture d'entrée, et un évidement aval communiquant avec une ouverture de sortie, lesdits évidements amont et aval étant séparés l'un de l'autre par une membrane élastique percée d'une lumière d'écoulement, la membrane élastique pouvant être déformée en s'appliquant contre une surface d'appui prévue dans l'évidement aval de manière à fermer l'accès libre vers ladite ouverture de sortie, une rainure étant prévue dans ladite surface d'appui de manière à définir, en coopérant avec la membrane, un canal de régulation de flux à section variable comportant à une de ses extrémités une entrée de l'évidement aval et à son extrémité opposée une sortie vers ladite ouverture de sortie, caractérisé en ce que ladite surface d'appui de la membrane dans ledit évidement aval présente la forme d'une voûte définissant la déformation maximale de la membrane vers l'intérieur dudit évidement aval, et en ce que ladite lumière d'écoulement est disposée en regard de ladite entrée dudit canal de régulation défini par la rainure dans l'évidement aval.

Selon d'autres caractéristiques de l'invention :
- ladite lumière d'écoulement est disposée au centre de la membrane et ladite entrée du canal de régulation est disposée au centre de ladite forme en voûte de l'évidement aval ;
- la membrane est montée flottante, sa périphérie prenant appui dans une gorge intérieure dans le corps creux dont la largeur est plus importante que l'épaisseur de la membrane ;
- la section efficace de la lumière d'écoulement de la membrane augmente en fonction de la déformation de celle-ci de sorte que l'entrée du canal de régulation soit entièrement dégagée lors de la déformation maximale de la membrane ;
- ledit évidement amont présente la forme d'une voûte inversée ;
- la sortie dudit canal de régulation est disposée sur la périphérie de ladite voûte de l'évidement aval ;
- une partie du canal de régulation décrit un arc de cercle sur la périphérie de ladite forme en voûte de l'évidement aval ;
- l'extension dudit arc de cercle peut varier d'environ un quart de cercle à un cercle entier ; et
- ladite entrée du canal de régulation et ladite rainure définissant le canal de régulation présentent la même profondeur dans ladite voûte de l'évidement aval ;

L'invention concerne également l'utilisation du distributeur selon l'invention pour la distribution d'eaux comportant des charges importantes en éléments en suspension, telles que les eaux naturelles de surface ou les effluents d'épuration plus ou moins traités.

D'autres caractéristiques et avantages de l'invention ressortiront de la description qui va suivre d'un mode de réalisation non limitatif de l'invention, en référence aux figures annexées dans lesquelles :
- la figure 1 est une vue en coupe longitudinale d'une section de canalisation et d'un distributeur d'irrigation selon l'invention monté sur cette section ;
- la figure 2 est une vue de dessus en perspective du distributeur d'irrigation de la figure 1 ;
- la figure 3 est une vue latérale du distributeur d'irrigation de la figure 1;
- la figure 4 est une vue en coupe longitudinale du distributeur d'irrigation de la figure 1 illustrant la membrane dans une position de repos à pression nulle ;
- la figure 5 est une vue en coupe longitudinale du distributeur d'irrigation de la figure 1 illustrant la membrane dans une position de déformation maximale par la pression ;
- les figures 6 à 10 sont des vues en coupe selon la ligne A-A de la figure 3 illustrant des variantes de l'extension du canal de régulation du flux; et
- la figure 11 est une vue schématique en coupe partielle du canal de régulation du flux selon la ligne B-B de la figure 6, avec la membrane ajoutée pour illustrer la régulation du flux dans le canal.

Dans les figures, les éléments identiques ou équivalents porteront les mêmes signes de référence.

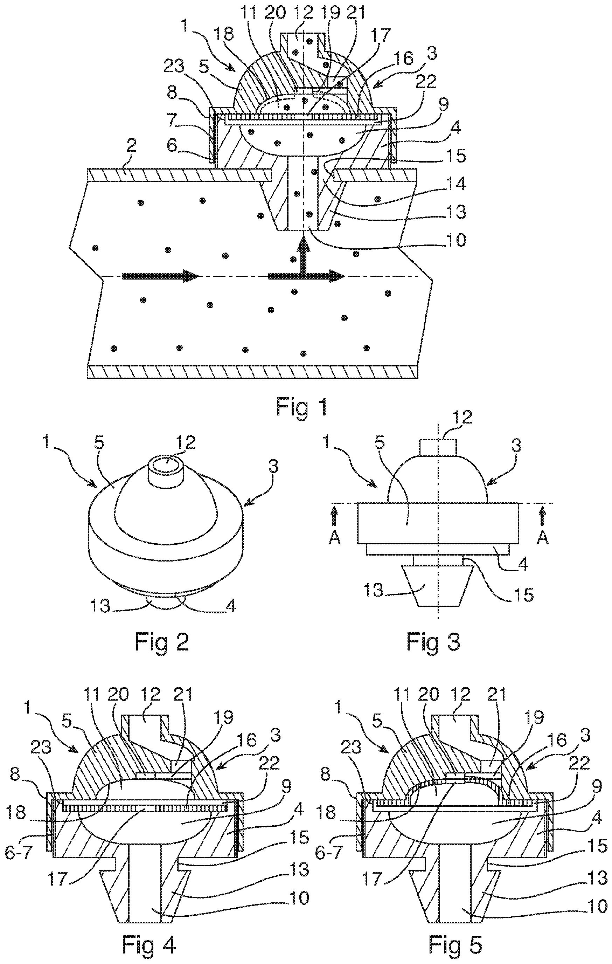

La figure 1 montre un distributeur d'irrigation 1 selon l'invention installé sur une canalisation 2. Le distributeur comporte un corps creux 3 qui dans l'exemple illustré est composé d'une première partie creuse 4 et d'une deuxième partie creuse 5 assemblée l'une à l'autre par une liaison filetée. Plus précisément, la première partie creuse 4 présente une forme globalement cylindrique pourvue d'un filetage extérieur 6 coopérant avec un filetage intérieur 7 prévu dans une jupe cylindrique 8 terminant la deuxième partie creuse vers le bas.

Les première et deuxième parties creuses 4, 5 peuvent être assemblées par tout autre moyen comme par exemple par emboîtement à force ou collage, mais le vissage est à préférer afin de permettre le désassemblage du distributeur pour donner facilement accès à l'intérieur du distributeur si besoin en est.

La première partie creuse 4 comporte un évidement amont 9 communiquant avec une ouverture d'entrée 10 du corps creux 3, alors que la deuxième partie creuse 5 comporte un évidement aval 11 communiquant avec une ouverture de sortie 12.

L'ouverture d'entrée est prévue dans une tête d'accrochage 13 globalement conique terminant la première partie creuse 4 vers le bas. Cette tête d'accrochage 13 est insérée à force dans un trou circulaire 14 de la canalisation 2 qui est en un matériau présentant une certaine élasticité, en général du polyéthylène, de sorte que le trou puisse se dilater élastiquement lors de l'introduction de la tête d'accrochage 13 dans celui-ci.

Le bord autour du trou 14 se loge alors dans une gorge 15 formant col terminant la partie conique de la tête d'accrochage 13 vers le haut. Le bord autour du trou 14 fait également fonction de moyen d'étanchéité en serrant élastiquement le col.

L'évidement amont 9 est séparé de l'évidement aval 11 par une membrane élastique 16 percée d'une lumière d'écoulement 17.

La membrane élastique 16 peut être déformée vers l'intérieur de l'évidement aval 11 jusqu'à venir se plaquer contre une surface d'appui 18 prévue dans celui-ci en fermant l'accès libre vers l'ouverture de sortie 12. Cet état de déformation maximale de la membrane 16 est montré en tireté à la figure 1 et en traits pleins à la figure 5.

La figure 4 montre la membrane 16 dans une position de repos à pression nulle et figure 5 montre la membrane dans une position de déformation maximale par la pression.

En outre, une rainure 19 est prévue dans la surface d'appui 18 de manière à définir, en coopérant avec la membrane 16, un canal de régulation de flux à section variable en fonction de la pénétration de la membrane dans la rainure 19. Ce canal de régulation comporte à l'une de ses extrémités une entrée 20 et à son extrémité opposée une sortie vers l'ouverture de sortie 12.

De préférence, la profondeur de l'entrée 20 est la même que celle de la rainure 19 pour éviter de créer une zone piège aux particules véhiculées par les eaux.

La membrane 16 est de préférence montée flottante comme montré sur les figures 1, 4 et 5. La périphérie de la membrane 16 prend appui dans une gorge intérieure 22 prévue dans le corps creux 3 dont la largeur est plus importante que l'épaisseur de la membrane 16.

Dans l'exemple illustré, la gorge 22 est formée d'une part par un épaulement circulaire 23 prévu sur le bord de l'évidement amont 9 et d'autre part par la face inférieure circulaire de la deuxième partie creuse 5 qui vient se poser sur l'épaulement 23 lors de l'assemblage des première et deuxième parties creuses 4, 5.

Le débit dans le distributeur est ainsi réglé par la membrane élastique 16 qui est apte à obstruer partiellement le canal de régulation 19 lorsqu'elle vient en appui contre la surface d'appui 18 de l'évidement aval 11 en fonction de la déformation par la pression différentielle entre l'évidement amont 9 et l'évidement aval 11. La membrane 16 libère ensuite entièrement le canal de régulation lorsque la pression en amont chute de sorte que le flux quitte l'évidement aval 11 directement par la sortie 21 à l'extrémité correspondante de la rainure 19.

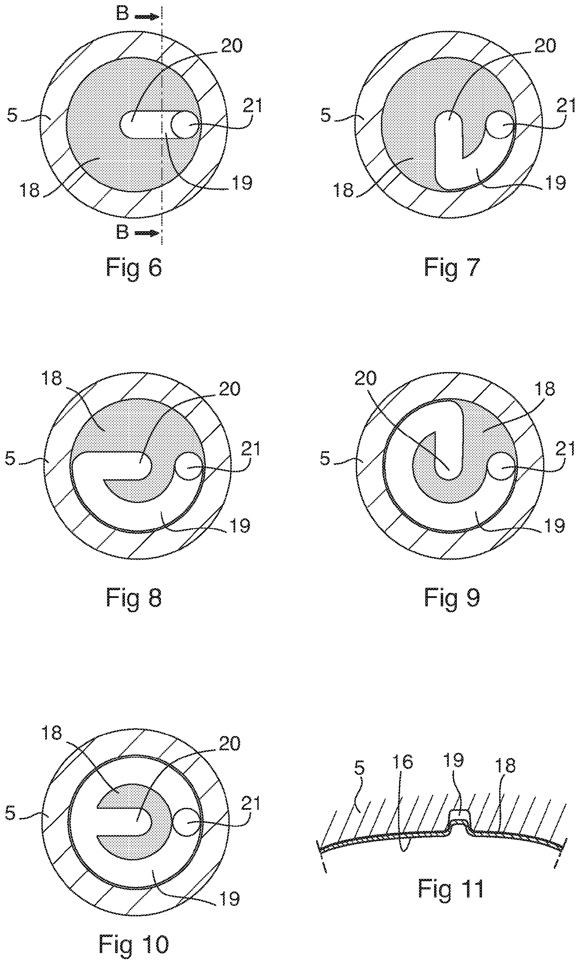

Ainsi, la membrane élastique 16 se déforme et vient s'appuyer plus ou moins complètement contre la surface d'appui 18 de l'évidement aval 11 selon que la pression amont est respectivement plus forte ou faible. La figure 11 montre schématiquement une coupe selon B-B de la figure 6 pour illustrer l'aspect de l'étranglement formé par la membrane élastique 16 dont une partie est sollicitée vers l'intérieur de la rainure 17 lorsque la partie centrale de la membrane est en appui contre la surface d'appui 18 de l'évidement aval 11.

La membrane élastique 16 présente une épaisseur relativement faible de manière à assurer un débattement important et dynamique en fonction des variations de pression en amont.

Selon une caractéristique importante de l'invention, la surface d'appui 18 de la membrane 16 dans ledit évidement aval 11 présente la forme d'une voûte définissant la déformation maximale de la membrane vers l'intérieur de l'évidement aval.

De préférence, la forme en voûte est globalement sphérique.

Grâce à cette forme en voûte de la surface d'appui 18, aucune zone piège à particule créant un fluide mort et entraînant un colmatage ne peut se former dans l'évidement aval 11.

Dans le même but, l'évidement amont 9 présente avantageusement la forme d'une voûte inversée qui peut également être sphérique.

Selon une autre caractéristique de l'invention, la lumière d'écoulement 17 est disposée en regard de l'entrée 20 du canal de régulation défini par la rainure 19.

La lumière d'écoulement 17 est de préférence disposée au centre de la membrane 16 et l'entrée 20 du canal de régulation se trouve alors également au centre de la forme en voûte de l'évidement aval 11.

En outre, la section efficace de la lumière d'écoulement 17 de la membrane élastique augmente en fonction de la déformation de celle-ci de sorte que l'entrée 20 du canal de régulation 19 soit entièrement dégagée lors de la déformation maximale de la membrane, comme cela est illustré à la figure 5 et en tireté à la figure 1.

Selon une caractéristique de l'invention, la sortie 21 du canal de régulation délimité par la rainure 19 est disposée sur la périphérie de la forme en voûte de l'évidement aval 11. Ce cheminement du canal de régulation a pour but de créer des pertes de charge lors des déformations de la membrane 16 obstruant au moins une partie du canal de régulation.

La figure 6 montre une première variante à extension radiale de la rainure 19 du canal de régulation.

Les figures 7 à 10 montrent d'autres variantes dans lesquelles la rainure 19 présente en outre une partie décrivant un arc de cercle sur la périphérie de la forme en voûte de l'évidement aval 11. Cette partie en arc de cercle peut varier d'environ un quart de cercle (figure 7) à un cercle entier (figure 10) en passant par un demi-cercle (figure 8) et trois quart d'un cercle (figure 9).

D'autres variantes créant des pertes de charges dans le canal de régulation peuvent être envisagées, comme par exemple un cheminement en zigzag ou en disposant des chicanes en quinconce dans la rainure 19.

A cause de sa conception particulière, le distributeur d'irrigation selon l'invention permet d'expulser la plus grande partie des particules qui se trouvent dans le distributeur au moment de sa mise en route, c'est-à-dire à chaque mise en pression de la canalisation, et cela grâce à une augmentation momentanée de la vitesse du fluide, ce qui entrainera la déformation de la membrane élastique 16 de la position de repos sans pression montrée à la figure 4, vers la position de déformation maximale montrée à la figure 5.

Dans le cas de distribution d'eaux comportant des charges importantes en particules en suspension d'une taille pouvant aller jusqu'à 1 mm, la canalisation alimentant le distributeur selon l'invention pourra être fermée et ouverte de nouveau à intervalles réguliers pour expulser les particules du distributeur à chaque nouvelle ouverture.

Est ainsi obtenu un distributeur d'irrigation autorégulé à circuit court dépourvu de zones pièges à particules avec fluide mort qui inévitablement conduiraient au colmatage du distributeur, en particulier lorsqu'il est utilisé pour la distribution d'eaux comportant des charges importantes en éléments en suspension, telles que les eaux naturelles de surface ou les effluents d'épuration plus ou moins traités.

Un autre avantage du distributeur d'irrigation selon l'invention est qu'il permet un flux autorégulé relativement important pouvant atteindre 100 l/h.

Bien entendu, l'invention n'est pas limitée aux exemples illustrés et décrits, et l'homme du métier sera en mesure de trouver des variantes sans pour autant sortir du cadre de l'invention.

## Revendications

1. Distributeur d'irrigation à débit autorégulé, comportant un corps creux (3) définissant dans son intérieur un évidement amont (9) communiquant avec une ouverture d'entrée (10), et un évidement aval (11) communiquant avec une ouverture de sortie (12), lesdits évidements amont et aval (9, 11) étant séparés l'un de l'autre par une membrane élastique (16), la membrane élastique (16) pouvant être déformée en s'appliquant contre une surface d'appui (18) prévue dans l'évidement aval (11) de manière à fermer l'accès libre vers ladite ouverture de sortie (12), une rainure (19) étant prévue dans ladite surface d'appui (18) de manière à définir, en coopérant avec la membrane (16), un canal de régulation de flux à section variable comportant à une de ses extrémités une entrée (20) de l'évidement aval (11) et à son extrémité opposée une sortie (21) vers ladite ouverture de sortie (12), ladite surface d'appui (18) de la membrane (16) dans ledit évidement aval (11) présentant la forme d'une voûte définissant la déformation maximale de la membrane (16) vers l'intérieur dudit évidement aval (11), **caractérisé en ce que** ladite membrane élastique (16) est percée d'une lumière d'écoulement (17) et **en ce que** ladite lumière d'écoulement (17) est disposée en regard de ladite entrée (20) dudit canal de régulation défini par la rainure dans l'évidement aval (11).

2. Distributeur d'irrigation selon la revendication 1, **caractérisé en ce que** ladite lumière d'écoulement (17) est disposée au centre de la membrane (16) et que ladite entrée (20) du canal de régulation (19) est disposée au centre de ladite forme en voûte de l'évidement aval (11).

3. Distributeur d'irrigation selon l'une quelconque des revendications précédentes, **caractérisé en ce que** la membrane (16) est montée flottante, sa périphérie prenant appui dans une gorge intérieure (22) dans le corps creux (3) dont la largeur est plus importante que l'épaisseur de la membrane (16).

4. Distributeur d'irrigation selon l'une quelconque des revendications précédentes, **caractérisé en ce que** la section efficace de la lumière d'écoulement (17) de la membrane (16) augmente en fonction de la déformation de celle-ci de sorte que l'entrée (20) du canal de régulation soit entièrement dégagée lors de la déformation maximale de la membrane (16).

5. Distributeur d'irrigation selon l'une quelconque des revendications précédentes, **caractérisé en ce que** ledit évidement amont (9) présente la forme d'une voûte inversée.

6. Distributeur d'irrigation selon l'une quelconque des revendications précédentes, **caractérisé en ce que** la sortie (2) dudit canal de régulation (19) est disposée sur la périphérie de ladite voûte de l'évidement aval (11).

7. Distributeur d'irrigation selon la revendication 6, **caractérisé en ce qu'**une partie du canal de régulation (19) décrit un arc de cercle sur la périphérie de ladite forme en voûte de l'évidement aval (11).

8. Distributeur d'irrigation selon la revendication 7, **caractérisé en ce que** l'extension dudit arc de cercle peut varier d'environ un quart de cercle à un cercle entier.

9. Distributeur d'irrigation selon l'une quelconque des revendications précédentes, **caractérisé en ce que** ladite entrée (21) du canal de régulation et ladite rainure (19) le définissant présentent la même profondeur dans ladite voûte de l'évidement aval (11).

10. Utilisation du distributeur selon l'une quelconque des revendications 1 à 9 pour la distribution d'eaux comportant des charges importantes en éléments en suspension, telles que les eaux naturelles de surface ou les effluents d'épuration plus ou moins traités.

## Patentansprüche

1. Bewässerungsspender mit selbstsreguliertem Durchfluss, aufweisend einen Hohlkörper (3), der in seinem Innern eine oberstromige Aussparung (9) definiert, die mit einer Einlassöffnung (10) kommuniziert, und eine unterstromige Aussparung (11), die mit einer Auslassöffnung (12) kommuniziert, wobei die oberstromige und unterstromige Aussparung (9, 11) durch eine elastische Membran (16) voneinander getrennt sind, wobei die elastische Membran (16) durch Anliegen an einer Stützfläche (18) verformbar ist, die in der unterstromigen Aussparung (11) ausgebildet ist, um den freien Zugang zur Auslassöffnung (12) zu verschließen, wobei eine Rinne (19) in der Stützfläche (18) vorgesehen ist, um durch Zusammenwirken mit der Membran (16) einen Stromregulierungskanal mit variablem Querschnitt zu definieren, aufweisend an einem seiner Enden einen Einlass (20) der unterstromigen Aussparung (11) und an seinem gegenüberliegenden Ende einen Auslass (21) in Richtung der Auslassöffnung (12), wobei die Stützfläche (18) der Membran (16) in der unterstromigen Aussparung (11) die Form eines Gewölbes aufweist, das die maximale Verformung der Membran (16) in das Innere der unterstromigen Aussparung (11) definiert, **dadurch gekennzeichnet, dass** die elastische Membran (16) von einer Fließöffnung (17) durchbrochen ist und dass die Fließöffnung (17) gegenüber dem Einlass (20) des Regulierungskanals angeordnet ist, der durch die Rinne in der unterstromigen Aussparung (11) definiert ist.

2. Bewässerungsspender nach Anspruch 1, **dadurch gekennzeichnet, dass** die Fließöffnung (17) im Zentrum der Membran (16) angeordnet ist und dass der Einlass (20) des Regulierungskanals (19) im Zentrum der Gewölbeform der unterstromigen Aussparung (11) angeordnet ist.

3. Bewässerungsspender nach einem der vorangehenden Ansprüche, **dadurch gekennzeichnet, dass** die Membran (16) schwimmend montiert ist, wobei sich ihr Umfang in einer inneren Auskehlung (22) im Hohlkörper (3) abstützt, dessen Breite größer als die Stärke der Membran (16) ist.

4. Bewässerungsspender nach einem der vorangehenden Ansprüche, **dadurch gekennzeichnet, dass** der wirksame Querschnitt der Fließöffnung (17) der Membran (16) in Abhängigkeit von der Verformung derselben derart zunimmt, dass der Einlass (20) des Regulierungskanals bei der maximalen Verformung der Membran (16) vollkommen freigegeben ist.

5. Bewässerungsspender nach einem der vorangehenden Ansprüche, **dadurch gekennzeichnet, dass** die oberstromige Aussparung (9) die Form eines umgekehrten Gewölbes aufweist.

6. Bewässerungsspender nach einem der vorangehenden Ansprüche, **dadurch gekennzeichnet, dass** der Ausgang (2) des Regulierungskanals (19) auf dem Umfang des Gewölbes der unterstromigen Aussparung (11) angeordnet ist.

7. Bewässerungsspender nach Anspruch 6, **dadurch gekennzeichnet, dass** ein Teil des Regulierungskanals (19) auf dem Umfang der Gewölbeform der unterstromigen Aussparung (11) einen Kreisbogen beschreibt.

8. Bewässerungsspender nach Anspruch 7, **dadurch gekennzeichnet, dass** die Erweiterung des Kreisbogens um zirka von einem Viertelkreis bis zu einem ganzen Kreis schwanken kann.

9. Bewässerungsspender nach einem der vorangehenden Ansprüche, **dadurch gekennzeichnet, dass** der Einlass (21) des Regulierungskanals und die Rinne (19), die ihn definiert, im Gewölbe der unterstromigen Aussparung (11) dieselbe Tiefe aufweisen.

10. Verwendung des Spenders nach einem der Ansprüche 1 bis 9 zum Spenden von Wasser, das erheblich mit suspendierten Elementen belastet ist, wie das natürliche Oberflächenwasser oder mehr oder weniger behandelte Abwässer.

## Claims

1. An irrigation dispenser with self-regulated flow, including a hollow body (3) defining, inside it, an upstream recess (9) communicating with an intake opening (10), and a downstream recess (11) communicating with an outlet opening (12), said upstream and downstream recesses (9, 11) being separated from one another by an elastic membrane (16), the elastic membrane (16) being able to be deformed by being pressed against a bearing surface (18) provided in the downstream recess (11) so as to close the free access to said outlet opening (12), a slot (19) being provided in said bearing surface (18) so as to define, by cooperating with the membrane (16), a flow regulating channel with a variable section including, at one of its ends, an inlet (20) from the downstream recess (11) and at its opposite end, an outlet (21) toward said outlet opening (12), said bearing surface (18) of the membrane (16) in said downstream recess (11) assuming the form of an arch defining the maximum deformation of the membrane (16) toward the inside of said downstream recess (11), **characterized in that** said elastic membrane (16) is pierced with a flow aperture (17) and **in that** said flow aperture (17) is arranged across from said inlet (20) of said regulating channel defined by the slot in the downstream recess (11).

2. The irrigation dispenser according to claim 1, **characterized in that** said flow aperture (17) is arranged at the center of the membrane (16) and said inlet (20) of the regulating channel (19) is arranged at the center of said arch shape of the downstream recess (11).

3. The irrigation dispenser according to any one of the preceding claims, **characterized in that** the membrane (16) is mounted floating, its periphery bearing in an inner groove (22) in the hollow body (3) whereof the width is larger than the thickness of the membrane (16).

4. The irrigation dispenser according to any one of the preceding claims, **characterized in that** the cross-section of the flow aperture (17) of the membrane (16) increases as a function of the deformation thereof, such that the inlet (20) of the regulating channel is completely clear during maximal deformation of the membrane (16).

5. The irrigation dispenser according to any one of the preceding claims, **characterized in that** said upstream recess (9) is in the form of an inverted arch.

6. The irrigation dispenser according to any one of the preceding claims, **characterized in that** the outlet (2) of said regulating channel (19) is arranged on the periphery of said arch of the downstream recess (11).

7. The irrigation dispenser according to claim 6, **characterized in that** part of the regulating channel (19) describes an arc of circle on the periphery of said arch shape of the downstream recess (11).

8. The irrigation dispenser according to claim 7, **characterized in that** the extension of said arc of circle can vary from about a quarter circle to a full circle.

9. The irrigation dispenser according to any one of the preceding claims, **characterized in that** said inlet (21) of the regulating channel and said slot (19) defining it have the same depth in said arch of the downstream recess (11).

10. A use of the dispenser according to any one of claims 1 to 9 for dispensing water including substantial fillers made up of elements in suspension, such as natural surface water or more or less treated purification effluents.
